# EUROPEAN PATENT APPLICATION

(11) **EP 4 834 123 A1**
(43) Date of publication of application: **04.11.2026**
(21) Application number: 24912976.8
(22) Date of filing: 26.12.2024
(51) Int. Cl.: A23L 2/38, A23C 11/10, A23L 2/00, A23L 2/56, A23L 2/66, A23L 11/60, A23L 11/65, A23L 33/14

(54) **YEAST-CONTAINING BEVERAGE AND METHOD FOR IMPROVING FLAVOR OF YEAST-CONTAINING BEVERAGE**

(30) Priority: 28.12.2023 JP 2023222435
(71) Applicant: Asahi Group Holdings, Ltd., Tokyo 130-8602 (JP)
(72) Inventor: MATSUMURA Asuna, Moriya-shi, Ibaraki 302-0106 (JP); NOBA Shigekuni, Moriya-shi, Ibaraki 302-0106 (JP); HOURI Ayako, Moriya-shi, Ibaraki 302-0106 (JP)
(74) Representative: J A Kemp LLP
(86) International application number: PCT/JP2024/046083
(87) International publication number: WO 2025/143090

(57) **Abstract**

To provide a yeast-containing drink that is reduced in characteristic yeasty smell and bitter taste of a yeast material and can be directly served for drinking.

Provided is a yeast-containing drink comprising a yeast cell body residue or a cell wall lysing enzyme-decomposition product thereof, wherein the content of vanillin is 0.1 ppm or more. The drink of the present invention is remarkably reduced in characteristic yeasty smell and bitter taste peculiar to yeast and improved in sweet taste and palatability, and therefore is more suitable for direct drinking as a yeast-containing drink than conventional products.

## Description

### Technical Field

The present invention relates to a yeast-containing drink comprising a yeast cell body residue or a cell wall lysing enzyme-decomposition product thereof, and vanillin, a method for producing the same, and a method for improving flavor of a yeast-containing drink comprising formulating vanillin.

### Background Art

In recent years, drinks using plant materials such as oats, soybeans and almonds, in place of a milk raw material have been attracting more attention for the reasons of avoiding milk-derived allergens, an increased demand for low-fat or non-fat foods due to diet consciousness and health consciousness, or an increased demand for vegan foods. However, these plant materials are usually more expensive than cow's milk and are known to contain allergic substances.

Besides such plant materials, drinks using a yeast material have also been reported. For example, the present applicant has reported the use of a composition comprising a cell wall lysing enzyme-decomposition product of a residue obtained after a yeast extract is produced (yeast cell body residue), as a food or drink (for example, see Patent Literature 1).

### Citation List

### Patent Literature

Patent Literature 1: WO 2022/185762 A

### Summary of Invention

### Technical Problem

However, the yeast material has a characteristic yeasty smell and bitter taste. Therefore, for the purpose of supplementing proteins, when the yeast material was used in a concentration of about 5%, there was a problem that it was not suitable for direct drinking due to the strong yeasty smell and bitter taste.

### Solution to Problem

The present inventors have conducted intensive studies to solve the above-mentioned problems. As a result, they have found that, in a yeast-containing drink comprising a yeast cell body residue or a cell wall lysing enzyme-decomposition product thereof, by setting the content of the residue or the decomposition product to a predetermined range, and setting the content of vanillin to 0.1 ppm or more, it can be directly served for drinking as a yeast-containing drink reduced in characteristic yeasty smell and bitter taste and improved in sweet taste and palatability, whereby they have completed the present invention.

Accordingly, the gist of the present invention is as follows.
[1] A yeast-containing drink comprising 1 to 20% by mass of a yeast cell body residue or a cell wall lysing enzyme-decomposition product thereof and 0.1 ppm or more of vanillin based on the total mass of the drink.
[2] The yeast-containing drink according to [1], comprising 0.1 to 200 ppm of vanillin.
[3] The yeast-containing drink according to [1] or [2], further comprising saccharide and salt.
[4] The yeast-containing drink according to any one of [1] to [3], comprising 0.1% by mass or more of saccharide and 0.005% by mass or more of salt based on the total mass of the drink.
[5] The yeast-containing drink according to any one of [1] to [4], further comprising 0.1 to 30% by mass of oil and fat based on the total mass of the drink.
[6] The yeast-containing drink according to any one of [1] to [5], wherein the residue is a water-insoluble fraction after hot water extraction of yeast.
[7] The yeast-containing drink according to any one of [1] to [5], wherein the decomposition product is a decomposition product of a yeast cell body residue with glucanase.
[8] The yeast-containing drink according to any one of [1] to [7], which is a milk-substitute drink.
[9] A method for producing a yeast-containing drink comprising 1 to 20% by mass of a yeast cell body residue or a cell wall lysing enzyme-decomposition product thereof and 0.1 ppm or more of vanillin based on the total mass of the drink, the method comprising mixing a suspension of the yeast cell body residue or the cell wall lysing enzyme-decomposition product thereof with vanillin.
[10] A method for improving flavor of a yeast-containing drink, comprising formulating 0.1 ppm or more of vanillin in a yeast-containing drink comprising 1 to 20% by mass of a yeast cell body residue or a cell wall lysing enzyme-decomposition product thereof.

### Advantageous Effects of Invention

According to the present invention, it is possible to provide a yeast-containing drink using an inexpensive and easily available yeast cell body residue or cell wall lysing enzyme-decomposition product thereof as a raw material. When the yeast-containing drink of the present invention contains 0.1 ppm or more of vanillin together with the yeast cell body residue or the cell wall lysing enzyme-decomposition product thereof, a characteristic yeasty smell (grassy odor derived from yeast) and a bitter taste (bitter taste that stimulates the tongue) peculiar to yeast are remarkably reduced, and a sweet taste (sweet taste like sugar) and a palatability as an overall evaluation (good flavor balance, aroma that is felt to be delicious as a drink) are improved, so that it can be provided as a yeast-containing drink also suitable for direct drinking. Thus, the yeast-containing drink of the present invention makes it possible to more easily take proteins, dietary fibers and other nutrients, etc. derived from yeast.

### Description of Embodiments

The present invention provides a yeast-containing drink comprising a yeast cell body residue or a cell wall lysing enzyme-decomposition product thereof and vanillin, in which the amount of the yeast cell body residue or the cell wall lysing enzyme-decomposition product thereof is preferably 1 to 20% by mass and the amount of vanillin is preferably 0.1 ppm or more based on the total mass of the drink.

One embodiment of the present invention provides a yeast-containing drink comprising 1 to 20% by mass of a yeast cell body residue and 0.1 ppm or more of vanillin based on the total mass of the drink.

The term "yeast cell body residue" used herein is not particularly limited as long as it is a material containing yeast cell wall, and a residue (insoluble fraction) of yeast cell bodies obtained by subjecting yeast to extraction treatment and removing extract therefrom. Specifically, the term refers to yeast cell bodies remaining as a residue by subjecting yeast to a known extraction treatment such as self-digestion treatment (protease treatment), hot water treatment, acid treatment, alkali treatment, and/or mechanical pulverization treatment and removing the supernatant (soluble fraction (yeast extract)) separated by e.g., centrifugation. The yeast cell body residue is preferably a residue (water-insoluble fraction) of the yeast cell bodies after hot water extraction of yeast. In the yeast cell body residue (water-insoluble fraction) according to the present invention, the soluble solid content thereof is preferably less than 5% by mass based on the dry mass of the residue. The solubleness of the soluble solid content means being soluble in water, and the soluble solid content is calculated as the ratio (% by mass) based on the dry mass of the yeast cell body residue. The soluble solid content of the yeast cell body residue according to the present invention can be measured in accordance with, for example, the method described in Test Example 4 of JP 7519036 B1 (JP 2023-119306 A).

The term "dry mass of the yeast cell body residue" used herein refers to the mass of the yeast cell body residue dried by a known method. The drying method is not particularly limited and any known drying method can be used, such as heat drying under atmospheric pressure, vacuum drying, spray drying and freeze drying. The dry mass can be obtained by drying a sample, for example, by a heat-dryer under atmospheric pressure at 105°C for 5 hours and measuring the residue.

The yeast cell body residue is constituted of e.g., proteins, lipids, ash, and dietary fibers. The content rate of the proteins is, for example, from 20% by mass to 60% by mass based on the dry mass of the yeast cell body residue. The content rate of the lipids is, for example, from 1% by mass to 10% by mass based on the dry mass of the yeast cell body residue. The content rate of the ash is, for example, from 0% by mass to 10% by mass based on the dry mass of the yeast cell body residue. The content rate of the dietary fibers is, for example, from 10% by mass to 60% by mass based on the dry mass of the yeast cell body residue. Other than the general nutritional components, the yeast cell body residue contains components reported to have physiological functions, such as β-glucan and α-mannan. β-Glucan is a polysaccharide obtained by polymerization of D-glucose via β-1,3 bond and β-1,6 bond, and is classified as a dietary fiber since it is an indigestible component in food that cannot be digested by human digestive enzymes. α-Mannan is a polysaccharide obtained by polymerization of D-mannose via α-1,6 bond, α-1,2 bond or α-1,3 bond, and is classified as a dietary fiber since it is an indigestible component in food that cannot be digested by human digestive enzymes. The content rate of the β-glucan is, for example, from 10% by mass to 40% by mass based on the dry mass of the yeast cell body residue. The content rate of the α-mannan is, for example, from 10% by mass to 40% by mass based on the dry mass of the yeast cell body residue. The contents of individual components can be determined by known analytical methods. The content of the protein can be obtained by measuring it as the amount of nitrogen, for example, by the Kjeldahl method, and multiplying the amount of nitrogen by a conversion factor of 6.25. The content of the lipids can be determined, for example, by the acid decomposition method. The content of the ash can be determined by the direct ashing method. The content of the dietary fibers can be determined, for example, by the Prosky method (enzyme-gravimetric method) or by high-performance liquid chromatography (enzyme-HPLC method). The content of α-mannan can be measured by determining, for example, mannose produced by hydrolyzing mannan. The content of the β-glucan can be measured, for example, by using a (1-3), (1-4)-β-glucan assay kit (manufactured by Megazyme Ltd.).

In the residue (water-insoluble fraction) of the yeast cell body obtained in this way, when the total amount of free amino acids (in particular, glutamic acid), organic acids and linear saturated aliphatic aldehydes is the predetermined amount mentioned below or more, by subjecting the residue to appropriate purification and washing operation depending on necessity, the yeast cell body residue, in which the total amount of the free amino acids (in particular, glutamic acid), the organic acids and the linear saturated aliphatic aldehydes is less than the predetermined amount mentioned below can be obtained. Examples of the purification/washing operation include repeating extraction and separation treatment and increasing the amount of washing water.

The yeast is not particularly limited as long as it can be applied to the field of foods. Examples of the yeast include brewing yeast, bakery yeast, and sake yeast. Alternatively, as the yeast, whereas it is not limited to these, there may be mentioned, for example, those belonging to the genera *Saccharomyces*, *Saccharomycodes*, *Rhodotorula*, *Endomycopsis*, *Nematospora*, *Brettanomyces*, *Candida*, *Torulopsis*, etc. Among these, the yeast is preferably *Saccharomyces cerevisiae*, *Saccharomyces pastorianus*, *Saccharomyces bayanus*, and *Candida utilis*. These may be used alone or two or more types of them may be used in combination.

The yeast cell body residue according to the present invention is preferably one in which the total amount of free glutamic acid is reduced to less than a predetermined amount since the characteristic flavor peculiar to yeast is reduced. Specifically, the total amount of free glutamic acid contained in the yeast cell body residue according to the present invention is preferably less than 0.5% by mass, more preferably less than 0.4% by mass, and further preferably less than 0.3% by mass based on the dry mass of the residue.

In addition, the yeast cell body residue according to the present invention is preferably one in which the total amount of not only glutamic acid but also free amino acids is reduced to less than a predetermined amount. Specifically, it is preferable that the total amount of free amino acids contained in the yeast cell body residue according to the present invention is less than 1% by mass, more preferably less than 0.8% by mass, and further preferably less than 0.5% by mass, based on the dry mass of the residue.

Incidentally, in the present invention, the term "total amount of free amino acids" means a total of each amount of histidine (His), asparagine (Asn), serine (Ser), glutamine (Gln), arginine (Arg), glycine (Gly), aspartic acid (Asp), glutamic acid (Glu), threonine (Thr), alanine (Ala), γ-aminobutyric acid (GABA), proline (Pro), cysteine (Cys), lysine (Lys), tyrosine (Tyr), methionine (Met), valine (Val), isoleucine (Ile), leucine (Leu), phenylalanine (Phe) and tryptophan (Trp) and, for example, it can be calculated from each measured value obtained by UPLC analysis (labeling method). Incidentally, the free amino acids may be any of L-isomer, D-isomer and DL-isomer, and preferably L-isomer. The measurement of the total amount of free amino acids contained in the yeast cell body residue by UPLC analysis (labeling method) can be performed, for example, according to the method described in Test Example 3 of JP 7519036 B1 (JP 2023-119306 A).

Also, it has been known that amino acids are involved in bitter taste and sweet taste, etc. Accordingly, in the yeast cell body residue according to the present invention, it is preferable that the total amount of the free amino acids known to exhibit bitter taste and/or sweet taste is also reduced to less than the predetermined amount. Accordingly, for example, in the yeast cell body residue according to the present invention, the total amount of phenylalanine, tyrosine, arginine, isoleucine, leucine, valine, methionine and lysine which are free amino acids known to exhibit bitter taste, is preferably less than 0.07% by mass, more preferably less than 0.05% by mass, and further preferably less than 0.03% by mass, based on the dry mass of the residue.

Also, the total amount of alanine and proline which are free amino acids known to exhibit sweet taste, is preferably less than 0.2% by mass, more preferably less than 0.1% by mass, and further preferably less than 0.05% by mass, based on the dry mass of the residue. In the yeast cell body residue according to the present invention, by controlling the total amount of the free amino acids and the total amount of the free amino acids known to exhibit bitter taste or sweet taste, further reduction of the characteristic flavor peculiar to yeast can be expected.

The yeast cell body residue according to the present invention is also preferably one in which the total amount of organic acids is reduced to less than a predetermined amount. Specifically, the organic acids contained in the yeast cell body residue according to the present invention are typically phosphoric acid and citric acid, and the content of the phosphoric acid is preferably less than 0.1% by mass, and more preferably less than 0.05% by mass based on the dry mass of the residue. Also, the content of the citric acid is preferably less than 0.03% by mass, and more preferably less than 0.02% by mass, based on the dry mass of the residue. In the yeast cell body residue according to the present invention, by controlling the total amount of organic acids, further reduction of the characteristic flavor peculiar to yeast can be expected.

In addition, the yeast cell body residue according to the present invention is preferably one in which the total content of heptanal, octanal, and nonanal, which are linear saturated aliphatic aldehydes having 7 to 9 carbon atoms, is reduced to a predetermined amount or less.

The linear saturated aliphatic aldehydes are known to have citrus flavors, grassy flavors, and a flavor of an oxidized oil and fat. Alcohols such as octanol and nonanol and 2-pentylfuran are known to have floral and sweet fruity scents and are reported to be contained in oxidized oil products.

When saturated linear aliphatic aldehydes are present at high concentrations, it is known that they emit unpleasant odors. Long linear aliphatic aldehyde has lower volatility than the short saturated linear aliphatic aldehyde. The smell of the linear aliphatic aldehyde gives different impression depending on the number of carbon atoms.

It is said that butanal having 4 carbon atoms and pentanal having 5 carbon atoms have an irritating odor like a sweet, sour and burnt odor, whereas hexanal having 6 carbon atoms is said to contribute to a green-beany smell. Heptanal having 7 carbon atoms, octanal having 8 carbon atoms, and nonanal having 9 carbon atoms have not only a green-beany smell but also an oily odor and an odor generated from an oxidized oil and fat. Decanal having 10 carbon atoms has a flavor such as citrus in addition to an oily odor.

Specifically, since the characteristic aroma peculiar to yeast is reduced, the total amount of heptanal, octanal, and nonanal, which are linear saturated aliphatic aldehydes having 7 to 9 carbon atoms contained in the yeast cell body residue according to the present invention, is preferably 3.8 ppm or less based on the dry mass of the residue. In view of the effect of reducing "yeasty smell", "oil-and-fat deterioration smell", and "grassy odor", the total amount is more preferably 3.5 ppm or less, further preferably 3.0 ppm or less, and particularly preferably 2.0 ppm or less. The lower limit of the total amount of heptanal, octanal, and nonanal, which are linear saturated aliphatic aldehydes having 7 to 9 carbon atoms contained in the yeast cell body residue according to the present invention, is not particularly limited, and may not be detected. However, when detected, the lower limit of the total amount is generally 0.03 ppm or more based on the dry mass of the residue.

Specifically, the content of heptanal contained in the yeast cell body residue according to the present invention is preferably 1.50 ppm or less based on the dry mass of the residue. In view of the effect of reducing "yeasty smell", "oil-and-fat deterioration smell", and "grassy odor", the content is more preferably 1.40 ppm or less, further preferably 1.25 ppm or less, and particularly preferably 1.00 ppm or less. The content of octanal contained in the yeast cell body residue according to the present invention is preferably 0.37 ppm or less based on the dry mass of the residue. In view of the effect of reducing "yeasty smell", "oil-and-fat deterioration smell", and "grassy odor", the content is more preferably 0.35 ppm or less, further preferably 0.30 ppm or less, and particularly preferably 0.20 ppm or less. The content of nonanal contained in the yeast cell body residue according to the present invention is preferably 2.02 ppm or less based on the dry mass of the residue. In view of the effect of reducing "yeasty smell", "oil-and-fat deterioration smell", and "grassy odor", the content is more preferably 1.80 ppm or less, further preferably 1.50 ppm or less, and particularly preferably 1.00 ppm or less. The lower limits of the content of heptanal, octanal, and nonanal, which are linear saturated aliphatic aldehydes having 7 to 9 carbon atoms contained in the yeast cell body residue according to the present invention, are not particularly limited, and may not be detected. However, when detected, the lower limits are each generally 0.01 ppm or more based on the dry mass of the residue. The content of each aldehyde contained in the yeast cell body residue can be calculated from each measured value obtained by a known method such as gas chromatography (GC) or liquid chromatography (LC).

In the present invention, the term "vanillin" is vanillin (4-hydroxy-3-methoxybenzaldehyde) or is not particularly limited as long as it is a natural or synthetic flavoring agent containing vanillin as a main component. Vanillin or a flavoring agent containing vanillin as a main component is available from a reagent supplier as a food or pharmaceutical additive.

The yeast-containing drink comprising the yeast cell body residue and vanillin of the present invention may be a cloudy liquid containing the yeast cell body residue and vanillin at appropriate concentrations in an appropriate medium (preferably, water). The concentration of the yeast cell body residue in the drink of the present invention is 1 to 20% by mass, preferably 1 to 10% by mass, and more preferably 3 to 8% by mass as the dry mass of the yeast cell body residue based on the total mass of the drink. When the amount of the yeast cell body residue to be formulated in the yeast-containing drink is increased, proteins, dietary fibers and other nutrients, etc. derived from yeast can be efficiently taken. However, if the formulated amount increases, the viscosity of yeast-containing drink increases. If the formulated amount of the yeast cell body residue falls within the above-mentioned range, it is possible to provide a drink from which proteins, dietary fibers and other nutrients, etc. derived from yeast can be efficiently taken while maintaining the preferred palatability as a yeast-containing drink. The concentration of vanillin in the drink of the present invention is 0.1 ppm or more, preferably 0.5 ppm or more, and more preferably 1.0 ppm or more based on the total mass of the drink. The upper limit of the concentration of vanillin in the drink of the present invention is not particularly limited, but it is preferably 500 ppm or less, more preferably 400 ppm or less, further preferably 300 ppm or less, and particularly preferably 200 ppm or less since it is possible to maintain a good balance of an aroma that is felt to be delicious as a drink and a flavor. The concentration range of vanillin in the drink of the present invention is, for example, 0.1 to 500 ppm, 0.1 to 300 ppm, 0.1 to 200 ppm, 1.0 to 500 ppm, 1.0 to 300 ppm, or 1.0 to 200 ppm. Usually, a flavoring agent is used for the purpose of adding a flavor to food and increasing the palatability, and the present inventors have found that, by formulating vanillin among such flavoring agents within the above-mentioned range, the aroma and flavor derived from the yeast material can be remarkably improved. Although the reason for this is not clear, it is considered that the characteristic yeasty smell and bitter taste derived from the yeast material are effectively masked by the sweet flavor peculiar to vanillin, and the balance of the aroma and flavor between them and the sweet taste caused by the sweet flavor peculiar to vanillin is improved, so that the palatability is improved.

In the drink of the present invention, the ratio (by mass) of vanillin: yeast cell body residue is in the range of preferably 0.0000005:1 to 0.05:1, more preferably 0.000002:1 to 0.02:1, further preferably 0.00002:1 to 0.01:1, and particularly preferably 0.0002:1 to 0.005:1.

In another embodiment of the present invention, there is provided a yeast-containing drink comprising 1 to 20% by mass of a cell wall lysing enzyme-decomposition product of a yeast cell body residue and 0.1 ppm or more of vanillin based on the total mass of the drink. Incidentally, the terms "yeast cell body residue" and "vanillin" are the same as defined above.

Also, the term "dry mass of a cell wall lysing enzyme-decomposition product of a yeast cell body residue" used herein refers to the mass of a cell wall lysing enzyme-decomposition product of a yeast cell body residue after drying the cell wall lysing enzyme-decomposition product of the yeast cell body residue by a known method. The drying method is not particularly limited and any known drying method can be used, such as heat drying under atmospheric pressure, vacuum drying, spray drying and freeze drying. The dry mass can be obtained by drying a sample, for example, by a heat-dryer under atmospheric pressure at 105°C for 5 hours and measuring the residue.

The cell wall lysing enzyme-decomposition product according to the present invention is preferably one in which the total amount of free glutamic acid is reduced to less than a predetermined amount. Specifically, the total amount of free glutamic acid contained in the cell wall lysing enzyme-decomposition product according to the present invention is preferably less than 0.4% by mass, more preferably less than 0.3% by mass, and further preferably less than 0.1% by mass, based on the dry mass of the decomposition product.

Also, the cell wall lysing enzyme-decomposition product according to the present invention is preferably one in which the total amount of not only free glutamic acid but also free amino acids is reduced to less than a predetermined amount. Specifically, the total amount of the free amino acids contained in the cell wall lysing enzyme-decomposition product according to the present invention is preferably less than 1% by mass, more preferably less than 0.5% by mass, and further preferably less than 0.3% by mass, based on the dry mass of the decomposition product.

Further, in the cell wall lysing enzyme-decomposition product according to the present invention, the total amount of phenylalanine, tyrosine, arginine, isoleucine, leucine, valine, methionine and lysine, which are free amino acids known to exhibit bitter taste, is preferably less than 0.1% by mass, more preferably less than 0.07% by mass, and further preferably less than 0.05% by mass, based on the dry mass of the decomposition product. Moreover, the total amount of alanine and proline, which are free amino acids known to exhibit sweet taste, is preferably less than 0.2% by mass, more preferably less than 0.1% by mass, and further preferably less than 0.05% by mass, based on the dry mass of the decomposition product. In the cell wall lysing enzyme-decomposition product according to the present invention, by controlling the total amount of the free amino acids and the total amount of the free amino acids known to exhibit bitter taste or sweet taste, further reduction of the characteristic flavor peculiar to yeast can be expected.

The cell wall lysing enzyme-decomposition product according to the present invention is also preferably one in which the total amount of organic acids is reduced to less than a predetermined amount. Specifically, the organic acids contained in the cell wall lysing enzyme-decomposition product according to the present invention are typically phosphoric acid and citric acid, and the content of phosphoric acid is preferably less than 0.20% by mass, more preferably less than 0.15% by mass, and further preferably less than 0.10% by mass based on the dry mass of the decomposition product. Also, the content of citric acid is preferably less than 0.02% by mass, and more preferably less than 0.01% by mass based on the dry mass of the decomposition product. In the cell wall lysing enzyme-decomposition product according to the present invention, by controlling the total amount of organic acids, further reduction of the characteristic flavor peculiar to yeast can be expected.

The cell wall lysing enzyme-decomposition product of the yeast cell body residue according to the present invention is preferably one in which the total amount of heptanal, octanal, and nonanal, which are linear saturated aliphatic aldehydes having 7 to 9 carbon atoms contained in the residue, is reduced to a predetermined amount or less. Specifically, the total amount of heptanal, octanal, and nonanal, which are linear saturated aliphatic aldehydes having 7 to 9 carbon atoms contained in the yeast cell body residue according to the present invention, is preferably 3.8 ppm or less based on the dry mass of the residue. In view of the effect of reducing "yeasty smell", "oil-and-fat deterioration smell", and "grassy odor", the total amount is more preferably 3.5 ppm or less, further preferably 3.0 ppm or less, and particularly preferably 2.0 ppm or less. The lower limit of the total amount of heptanal, octanal, and nonanal, which are linear saturated aliphatic aldehydes having 7 to 9 carbon atoms contained in the yeast cell body residue according to the present invention, is not particularly limited, and may not be detected. However, when detected, the lower limit of the total amount is generally 0.03 ppm or more based on the dry mass of the residue.

Specifically, in the cell wall lysing enzyme-decomposition product of the yeast cell body residue according to the present invention, the content of heptanal contained in the residue is preferably 1.50 ppm or less based on the dry mass of the residue. In view of the effect of reducing "yeasty smell", "oil-and-fat deterioration smell", and "grassy odor", the content is more preferably 1.40 ppm or less, further preferably 1.25 ppm or less, and particularly preferably 1.00 ppm or less. The content of octanal contained in the residue is preferably 0.37 ppm or less based on the dry mass of the residue. In view of the effect of reducing "yeasty smell", "oil-and-fat deterioration smell", and "grassy odor", the content is more preferably 0.35 ppm or less, further preferably 0.30 ppm or less, and particularly preferably 0.20 ppm or less. The content of nonanal contained in the residue is preferably 2.02 ppm or less based on the dry mass of the residue. In view of the effect of reducing "yeasty smell", "oil-and-fat deterioration smell", and "grassy odor", the content is more preferably 1.80 ppm or less, further preferably 1.50 ppm or less, and particularly preferably 1.00 ppm or less. In the cell wall lysing enzyme-decomposition product of the yeast cell body residue according to the present invention, the lower limits of the content of heptanal, octanal, and nonanal, which are linear saturated aliphatic aldehydes having 7 to 9 carbon atoms contained in the residue are not particularly limited, and may not be detected. However, when detected, the lower limits are each generally 0.01 ppm or more based on the dry mass of the residue. The content of each aldehyde contained in the residue can be calculated from each measured value obtained by a known method such as gas chromatography (GC) or liquid chromatography (LC).

The term "cell wall lysing enzyme" used herein refers to an enzyme capable of decomposing part or all of the yeast cell wall or a combination of such enzymes. The cell wall lysing enzyme preferably has endo activity, and more preferably has endo activity, alone. The cell wall lysing enzyme preferably has low, little or no protease activity (that is, having no protease activity). Alternatively, when a cell wall lysing enzyme having protease activity is used or when an enzyme having protease activity is co-present, the enzyme is preferably used under conditions (for example, pH, temperature) where protease activity can be suppressed.

The cell wall lysing enzyme may be derived from a natural product, commercially available, or obtained by a method using, e.g., genetic recombination technology.

Examples of the cell wall lysing enzyme include, but are not limited to, a glucanase and a mannanase. The glucanase (preferably having endo activity (preferably endo activity alone), and/or having no protease activity) is, for example, a glucanase having β-1,3, β-1,4, and/or β-1,6 activity, preferably a glucanase derived from the genus *Streptomyces* or the genus *Talaromyces*, more preferably a glucanase derived from the genus *Streptomyces*, further preferably a glucanase derived from *Streptomyces* and having β-1,3, β-1,4, and/or β-1,6 activity, further more preferably a glucanase derived from *Streptomyces*, having β-1,3, β-1,4, and/or β-1,6 activity, and endo activity (preferably having endo activity alone), even still more preferably a glucanase derived fro*m Streptomyces*, having β-1,3, β-1,4, and/or β-1,6 activity, endo activity, and no protease activity (for example, DENAZYME GEL-L1/R, manufactured by Nagase Viita Co., Ltd.), and even still more preferably a glucanase derived from *Streptomyces*, having β-1,3, β-1,4, and/or β-1,6 activity, endo activity alone, and no protease activity.

In an embodiment of the present invention, the cell wall lysing enzyme is a glucanase.

In an embodiment of the present invention, the cell wall lysing enzyme is a glucanase having β-1,3, β-1,4, and/or β-1,6 activity.

In an embodiment of the present invention, the cell wall lysing enzyme is a glucanase derived from *Streptomyces*.

In a preferred embodiment of the present invention, the cell wall lysing enzyme is a glucanase derived from *Streptomyces* and having β-1,3, β-1,4, and/or β-1,6 activity.

In an embodiment of the present invention, the cell wall lysing enzyme is a glucanase having endo activity (preferably having endo activity alone).

In a preferred embodiment of the present invention, the cell wall lysing enzyme is a glucanase derived from *Streptomyces* having β-1,3, β-1,4, and/or β-1,6 activity, and endo activity (preferably endo activity alone).

In an embodiment of the present invention, the cell wall lysing enzyme is a glucanase having no protease activity.

In a preferred embodiment of the present invention, the cell wall lysing enzyme is a glucanase derived from *Streptomyces*, having β-1,3, β-1,4, and/or β-1,6 activity, endo activity (preferably endo activity alone), and no protease activity.

The term "cell wall lysing enzyme-decomposition product" used herein refers to a product obtained by decomposing the yeast cell body residue with the cell wall lysing enzyme, specifically, a product obtained by decomposing the yeast cell wall contained in the yeast cell body residue with the cell wall lysing enzyme.

The cell wall lysing enzyme-decomposition product of the yeast cell body residue is constituted of, e.g., proteins, lipids, ash, and dietary fibers. The content rate of proteins is, for example, from 20% by mass to 60% by mass based on the dry mass of the cell wall lysing enzyme-decomposition product of the yeast cell body residue. The content rate of the lipids is, for example, from 1% by mass to 10% by mass based on the dry mass of the cell wall lysing enzyme-decomposition product of the yeast cell body residue. The content rate of the ash is, for example, from 0% by mass to 10% by mass based on the dry mass of the cell wall lysing enzyme-decomposition product of the yeast cell body residue. The content rate of the dietary fibers is, for example, from 10% by mass to 60% by mass based on the dry mass of the cell wall lysing enzyme-decomposition product of the yeast cell body residue. Other than general nutritional components, components which are reported to have physiological functions, such as β-glucan and α-mannan, are contained in the cell wall lysing enzyme-decomposition product of the yeast cell body residue. β-Glucan is a polysaccharide obtained by polymerization of D-glucose via β-1,3 bond and β-1,6 bond, and is classified as a dietary fiber since it is an indigestible component in food that cannot be digested by human digestive enzymes. α-Mannan is a polysaccharide obtained by polymerization of D-mannose via α-1,6 bond, α-1,2 bond or α-1,3 bond, and is classified as a dietary fiber since it is an indigestible component in food that cannot be digested by human digestive enzymes. The content rate of the β-glucan varies depending on the exo activity of the glucanase contained in the cell wall lysing enzyme and is, for example, from 0% by mass to 40% by mass based on the dry mass of the cell wall lysing enzyme-decomposition product of the yeast cell body residue. The content rate of the α-mannan is, for example, from 10% by mass to 40% by mass based on the dry mass of the cell wall lysing enzyme-decomposition product of the yeast cell body residue. The contents of individual components can be measured by known analytical method as mentioned above.

Examples of the method for obtaining a "cell wall lysing enzyme-decomposition product", include, but are not limited to, methods commonly known to those skilled in the art, those described in Examples and a method comprising the following:
(a) treating the yeast cell body residue with a cell wall lysing enzyme, and
(b) collecting the treated product obtained in (a),
or analogous methods thereto.

In another embodiment of the present invention, the decomposition product is obtained by the method comprising the following:
(a) treating the yeast cell body residue with a cell wall lysing enzyme (preferably glucanase) at 40 to 60°C for 1 to 24 hours, and
(b) collecting the treated product obtained in (a).

The term "yeast cell body residue" in the (a) is the same as defined above, and is preferably the residue (water-insoluble fraction) of the yeast cell body after hot water extraction of yeast. Preferably the yeast cell body residue having less than 5% by mass of soluble solid content based on its dry mass is used.

The term "cell wall lysing enzyme" in the (a) is the same as defined above, and is preferably a glucanase.

The term "treatment" in the (a) is not particularly limited as long as it is performed in the conditions under which the cell wall lysing enzyme can decompose the yeast cell wall contained in the yeast cell body residue, and can be appropriately changed depending on, e.g., the origin of the yeast cell wall, the type and/or amount of cell wall lysing enzyme, and desired characteristics. The treatment is usually performed in a desired solvent (for example, water). For example, the treatment is performed in a suspension in which the yeast cell body residue is suspended in a solvent (for example, water). The suspension may be subjected to sterilization treatment (for example, heat sterilization, filter sterilization), if necessary. The treatment of the yeast cell body residue with the cell wall lysing enzyme can be performed, for example, at a temperature of more than 0°C to less than 100°C (preferably 10 to 70°C, more preferably 25 to 65°C, and further preferably 40 to 60°C) for 0.5 to 120 hours (preferably 0.5 to 60 hours, more preferably 1 to 24 hours, further preferably 3 hours to 24 hours, and particularly preferably 12 to 24 hours) at a pH of 1 to 12 (preferably 2 to 10, more preferably 3 to 8, and further preferably 4 to 6).

After the above-mentioned treatment, the cell wall lysing enzyme may be inactivated by high temperature treatment, acid or alkali treatment or the like, if necessary.

In the (b), the treated product obtained in (a) may be used directly in its entirety including the residue (insoluble fraction) as the "cell wall lysing enzyme-decomposition product of the yeast cell body residue". Alternatively, if necessary, the product, which is obtained by further performing, e.g., purification (for example, HPLC, ultrafiltration), condensation (for example, air-dry, filtration under reduced pressure), sterilization (for example, heat sterilization, filter sterilization), and drying (for example, air-dry, heating, drying under reduced pressure, spray drying, freeze drying), may be used as the "cell wall lysing enzyme-decomposition product of the yeast cell body residue". Incidentally, the conditions for these processes can be controlled by those skilled in the art.

The yeast-containing drink comprising the cell wall lysing enzyme-decomposition product of the yeast cell body residue and vanillin of the present invention may be a cloudy liquid containing the decomposition product and vanillin at appropriate concentrations in an appropriate medium (preferably, water). The concentration of the cell wall lysing enzyme-decomposition product of the yeast cell body residue in the drink of the present invention is 1 to 20% by mass, preferably 1 to 10% by mass, and more preferably 3 to 8% by mass as the dry mass of the cell wall lysing enzyme-decomposition product of the yeast cell body residue based on the total mass of the drink. When the amount of the cell wall lysing enzyme-decomposition product of the yeast cell body residue to be formulated in a yeast-containing drink increases, proteins, dietary fibers and other nutrients, etc. derived from yeast can be efficiently taken. However, if the formulated amount increases, the viscosity of yeast-containing drink increases. If the formulated amount of the cell wall lysing enzyme-decomposition product of the yeast cell body residue falls within the above-mentioned range, it is possible to provide a drink from which proteins, dietary fibers and other nutrients, etc. derived from yeast can be efficiently taken while maintaining the preferred palatability as a yeast-containing drink. The concentration of vanillin in the drink of the present invention is 0.1 ppm or more, preferably 0.5 ppm or more, and more preferably 1.0 ppm or more based on the total mass of the drink. The upper limit of the concentration of vanillin in the drink of the present invention is not particularly limited, but it is preferably 500 ppm or less, more preferably 400 ppm or less, further preferably 300 ppm or less, and particularly preferably 200 ppm or less since it is possible to maintain a good balance of an aroma that is felt to be delicious as a drink and a flavor. The concentration range of vanillin in the drink of the present invention is, for example, 0.1 to 500 ppm, 0.1 to 300 ppm, 0.1 to 200 ppm, 1.0 to 500 ppm, 1.0 to 300 ppm, or 1.0 to 200 ppm. Usually, a flavoring agent is used for the purpose of adding a flavor to food and increasing the palatability, and the present inventors have found that, by formulating vanillin among such flavoring agents within the above-mentioned range, the aroma and flavor derived from the yeast material can be remarkably improved. Although the reason for this is not clear, it is considered that the characteristic yeasty smell and bitter taste derived from the yeast material are effectively masked by the sweet flavor peculiar to vanillin, and the balance of the aroma and flavor between them and the sweet taste caused by the sweet flavor peculiar to vanillin is improved, so that the palatability is improved.

In the drink of the present invention, the ratio (by mass) of vanillin: cell wall lysing enzyme-decomposition product of the yeast cell body residue is preferably in the range of 0.0000005:1 to 0.05:1, more preferably 0.000002:1 to 0.02:1, further preferably 0.00002:1 to 0.01:1, and particularly preferably 0.0002:1 to 0.005:1.

In the yeast-containing drink of the present invention, an appropriate medium (preferably water) can be formulated in addition to the yeast cell body residue or the cell wall lysing enzyme-decomposition product thereof and vanillin. The formulated amount of the medium (preferably water) in the yeast-containing drink can be approximately 30 to 99% by mass, preferably 40 to 98% by mass, more preferably 40 to 97% by mass, further preferably 40 to 95% by mass, and particularly preferably 45 to 93% by mass, based on the mass of the yeast-containing drink. From the viewpoint of enhancing the drinkability of the drink, it is preferable to increase the formulated amount of the medium (preferably, water) in the yeast-containing drink, and specifically, the lower limit value in the range of the above-described formulated amount can be changed to 50% by mass, 60% by mass, 70% by mass, or 80% by mass.

The yeast-containing drink of the present invention preferably further contains oil and fat.

As the "oil and fat" used herein, it is not particularly limited and vegetable oils and fats, animal oils and fats or processed oils and fats can be used, and examples thereof include edible safflower oil, edible grape oil, edible soybean oil, edible sunflower oil, edible corn oil, edible cottonseed oil, sesame oil, edible rapeseed oil, edible rice bran oil, edible peanut oil, edible olive oil, edible palm oil, edible palm olein, edible palm stearin, edible palm kernel oil, edible coconut oil, edible blended oil, flavored edible oil, beef tallow, lard, chicken oil, fish oil, milk fat, hydrogenated oils and fats, and oils and fats produced by microorganisms such as yeast.

The amount of the oil and fat contained in the yeast-containing drink of the present invention is not particularly limited, but is preferably 0.1 to 30% by mass, more preferably 0.1 to 10% by mass, further preferably 0.1 to 5% by mass, and particularly preferably 1 to 5% by mass based on the total mass of the drink. Within such a range, it is possible to maintain a good balance of taste while enhancing milk-like mildness, thickness, and aftertaste as a drink.

In the drink of the present invention, the ratio (by mass) of oil and fat: yeast cell body residue or cell wall lysing enzyme-decomposition product thereof is preferably in the range of 0.005:1 to 30:1, more preferably 0.01:1 to 10:1, further preferably 0.1:1 to 5:1, further more preferably 0.1:1 to 2.5:1, and particularly preferably 0.1:1 to 1:1.

If the formulated amount of the medium (preferably water) and the oil and fat in the yeast-containing drink falls within the above-mentioned range, the yeast cell body residue or the cell wall lysing enzyme-decomposition product thereof and the oil and fat can be homogeneously dispersed in the medium to provide an easy-to-take drink.

The method for producing the yeast-containing drink of the present invention is not particularly limited, but can be performed by mixing the yeast cell body residue or the cell wall lysing enzyme-decomposition product thereof with vanillin (as necessary, with oil and fat and other optional components described later) by an arbitrary method. For example, it may be performed by mixing and emulsifying a predetermined amount of the yeast cell body residue or the cell wall lysing enzyme-decomposition product thereof, water, and optionally oil and fat using an appropriate stirrer (for example, a homomixer, a homogenizer, or the like) to obtain a base liquid (emulsion), and then adding vanillin.

According to yet another embodiment of the present invention, there is provided a yeast-containing drink comprising 1 to 20% by mass of the yeast cell body residue or the cell wall lysing enzyme-decomposition product thereof and 0.1 ppm or more of vanillin based on the total mass of the drink, and saccharide and salt.

According to still yet another embodiment of the present invention, there is provided a yeast-containing drink comprising 1 to 20% by mass of the yeast cell body residue or the cell wall lysing enzyme-decomposition product thereof, 0.1 ppm or more of vanillin, and 0.1 to 30% by mass of oil and fat based on the total mass of the drink, and saccharide and salt.

Examples of the "saccharide" used herein include, but are not limited to, monosaccharides such as glucose and fructose, and disaccharides such as sucrose, lactose, and maltose. The saccharide is preferably sucrose or it is not particularly limited as long as it is one that contains sucrose as a main component and is available as food. The raw material of sucrose may be cane sugar, beet sugar, or the like, and the purity of sucrose may be granulated sugar, brown soft sugar, white soft sugar, yellow soft sugar, or the like.

The term "salt" used herein is sodium chloride or is not particularly limited as long as it is one that contains sodium chloride as a main component and is available as food. The salt may be rock salt, solar salt, boiled-down salt, or the like, and the purity may be special grade salt, common salt, common grade salt, white salt, or the like.

The amount of the saccharide contained in the yeast-containing drink of the present invention is not particularly limited, but is preferably 0.1% by mass or more, more preferably 0.1 to 10% by mass, further preferably 0.5 to 7% by mass, and particularly preferably 0.5 to 5% by mass based on the total mass of the drink. Within such a range, it is possible to maintain a good balance of milk-like taste as a drink. Incidentally, the yeast cell body residue or the cell wall lysing enzyme-decomposition product thereof according to the present invention may not contain saccharide or may contain an extremely small amount of saccharide, but does not substantially affect the above amount. The amount (concentration) of saccharide contained in the yeast-containing drink in the present invention is a value calculated based on the amount added to the drink of the present invention.

The amount of salt contained in the yeast-containing drink of the present invention is not particularly limited, but is preferably 0.005% by mass or more, more preferably 0.005 to 0.5% by mass, further preferably 0.005 to 0.3% by mass, and particularly preferably 0.01 to 0.3% by mass based on the total mass of the drink. By setting the amount of salt contained in the yeast-containing drink in such a range in the presence of the above amount of saccharide, it is possible to maintain a good balance of milk-like taste as a drink. The yeast cell body residue or the cell wall lysing enzyme-decomposition product thereof according to the present invention may contain no salt or an extremely small amount of salt, but does not substantially affect the above amount. Therefore, in the present invention, the amount (concentration) of salt contained in the yeast-containing drink is a value calculated based on the amount added to the drink of the present invention.

In the drink of the present invention, the ratio (by mass) of saccharide: yeast cell body residue or cell wall lysing enzyme-decomposition product thereof is preferably in the range of 0.005:1 to 10:1, more preferably 0.01:1 to 5:1, further preferably 0.02:1 to 2:1, and particularly preferably 0.1:1 to 1.5:1.

In the drink of the present invention, the ratio (by mass) of salt: yeast cell body residue or cell wall lysing enzyme-decomposition product thereof is preferably in the range of 0.00025:1 to 0.5:1, more preferably 0.0005:1 to 0.2:1, further preferably 0.001:1 to 0.1:1, and particularly preferably 0.001:1 to 0.05:1.

The ratio (by mass) of saccharide: salt in the drink of the present invention is preferably in the range of 0.2:1 to 2000:1, more preferably 1:1 to 1000:1, further preferably 10:1 to 500:1, and particularly preferably 50:1 to 500:1. Within such a range, it is possible to maintain a good balance of milk-like taste as a drink.

In yet another embodiment of the present invention, the yeast-containing drink of the present invention is provided as a milk-substitute drink (for example, yeast milk). In the present invention, the term "milk-substitute drink" refers to a drink that can be used in place of milk (typically, cow's milk) consumed by humans. Milk consumed by humans is a cloudy liquid secreted by the mammary glands of mammals, containing water, nutrients such as proteins, lipids, carbohydrates, vitamins, and minerals, and having a distinctive milk flavor. The milk-substitute drink refers to a liquid having one or a plurality of these characteristics and consumed by humans. The milk-substitute drinks are generally produced from plant materials such as soybeans, almonds, oats, rice, and coconuts, and contain plant-derived proteins and lipids. Some of the milk-substitute drinks may contain dietary fibers rarely contained in milk. The milk-substitute drinks produced from plant materials are used alone or may be used as a mixture or as a mixture with animal-derived milk. The milk-substitute drink of the present invention can be used in place of milk-substitute drinks produced from such plant materials commonly known. When provided as a milk-substitute drink, an oil and fat is preferably formulated. In the milk-substitute drink, if the formulated amount of the oil and fat increases, the taste becomes rich; a sense of satisfaction increases; and smooth drinking can be obtained. On the other hand, if the formulated amount increases too much, there are unfavorable effects such as reduced drinkability of the milk-substitute drink and intake of too much energy. However, if the formulated amount of the oil and fat falls within the above-mentioned range, rich taste, a sense of satisfaction and smooth drinking can be provided to the milk-substitute drink, and at the same time the milk-substitute drink can be easy-to-drink and provide an appropriate amount of energy.

The milk-substitute drink of the present invention can become a novel milk-substitute drink prepared from yeast, as a main raw material, containing proteins as a main component, appropriately containing oils and fats, and having a milk-like appearance. If a raw material derived from animal is not used, a drink for vegetarians and vegans who avoid intake of animal foods is obtained. When an oil and fat produced from a microorganism as a raw material is used, a novel milk-substitute drink without using animals and plants is obtained. The yeast-containing drink of the present invention may be used in cooking as a milk substitute, and for example, it can be used in foods such as gratin and confectionery.

The yeast-containing drink of the present invention may further contain additives. Examples of the additives include, but are not limited to, an excipient, a lubricant, a binder, a disintegrant, a pH adjuster, a solvent, a solubilizing agent, a suspending agent, a buffer, a preservative, an antioxidant, a colorant, a sweetener, a surfactant, and a flavoring agent. For these additives, for example, those known as food or pharmaceutical additives can be used. The amounts or others of the additives can be appropriately controlled by those skilled in the art according to the purpose.

Another embodiment of the present invention provides a method for improving flavor of a yeast-containing drink, comprising formulating 0.1 ppm or more of vanillin in a yeast-containing drink comprising a yeast cell body residue or a cell wall lysing enzyme-decomposition product thereof.

For these embodiments of the present invention, the explanation given above for the embodiments of the yeast-containing drink comprising the yeast cell body residue or the cell wall lysing enzyme-decomposition product thereof can be applied in the same manner.

### Examples

Hereinafter, the present invention will be explained in more detail by referring to Examples, but these Examples should not be construed as limiting the scope of the present invention.

### [Examples 1 to 10, Comparative Examples 1 to 2]

The raw materials shown in the following Table 1 were added, and the mixture was subjected to preliminary emulsification (8000 rpm for 10 minutes) using PRIMIX HOMOMIXER MARK II MODEL 2.5 (manufactured by PRIMIX Corporation), and emulsified with a homogenizer (Homogenizer L-100-H2-CH, manufactured by Sanwa Engineering Co., Ltd.): 220 bar 3 times) to obtain a base liquid. Two types of base liquids each using yeast material A or B described later as yeast materials were prepared. Next, vanillin was added so as to have the concentration shown in Table 2, and yeast-containing drinks (Examples 1 to 10, Comparative Examples 1 to 2) were obtained as each test sample.

**[Table 1]**

| Table 1: Formulation of base liquid | |
|---|---|
| Raw material | Base liquid |
| Yeast material | 5 g |
| Edible sunflower oil | 2 g |
| Water | 93 g |

**[Table 2]**

| Table 2: Yeast material and vanillin concentration (ppm) | | |
|---|---|---|
| | Base liquid | Vanillin concentration (ppm) |
| Comparative Example 1 | Base liquid using yeast material A | 0.05 |
| Example 1 | | 0.1 |
| Example 2 | | 1.0 |
| Example 3 | | 100 |
| Example 4 | | 200 |
| Example 5 | | 300 |
| Comparative Example 2 | Base liquid using yeast material B | 0.05 |
| Example 6 | | 0.1 |
| Example 7 | | 1.0 |
| Example 8 | | 100 |
| Example 9 | | 200 |
| Example 10 | | 300 |

### [Preparation of Yeast Material A (Yeast Material Derived from Baker's Yeast)]

Yeast material A derived from baker's yeast was prepared in the same manner as in Example 2 of JP 7519036 B1 (JP 2023-119306 A).

Dried yeast (Hyper Yeast HG-DY manufactured by Asahi Group Foods, Ltd.) was extracted with hot water. A heavy liquid (insoluble fraction) was separated from the yeast extract by a nozzle-type continuous centrifuge and sterilized in the condition of 125°C for 40 seconds and spray-dried to obtain a yeast cell body residue.

An aqueous suspension of the obtained yeast cell body residue (solid content: 16%) was subjected to solid-liquid separation while adding water using three nozzle-type continuous centrifuges arranged in series to obtain a heavy liquid from which soluble components were removed. The obtained heavy liquid was sterilized at 125°C for 40 seconds.

The sterilized heavy liquid was controlled to satisfy the conditions: pH 5.3 at 50°C, and 0.2% by mass of glucanase (DENAZYME GEL-L1/R, manufactured by Nagase Viita Co., Ltd.) based on the dry mass, was added. The resulting mixture was treated at 50°C for 18 hours. The treated product was treated in the conditions of 125°C for 40 seconds to sterilize and simultaneously inactivate glucanase, and spray-dried to obtain a cell wall lysing enzyme-decomposition product as yeast material A.

### [Preparation of Yeast Material B (Yeast Material Derived from Beer Yeast)]

The beer yeast was extracted with hot water, and the water-insoluble fraction obtained by centrifugation was dried to obtain a yeast cell body residue. An aqueous suspension of the obtained yeast cell body residue (solid content: 16%) was sterilized (121°C, 15 min) in an autoclave. Under the conditions: pH 5.3 at 50°C, 0.2% by mass of glucanase (DENAZYME GEL-L1/R, manufactured by Nagase Viita Co., Ltd.) based on the dry mass of the yeast cell body residue was added to the sterilized suspension. The resulting mixture was treated at 50°C for 24 hours. Thereafter, the treated product was heated to about 80°C to inactivate the glucanase, sterilized (121°C, 15 min) in an autoclave, and spray-dried to obtain a cell wall lysing enzyme-decomposition product as yeast material B.

### [Examples 11 to 18]

In order to confirm the influence on the drink when saccharide and salt were added to the base liquid and the concentration was changed, the following test samples were prepared.

Liquids prepared in the same manner as in Example 3 and Example 8 except that saccharide (cup mark granulated sugar manufactured by Nissin Sugar Manufacturing Co., Ltd.) and salt (HAKATA SALT manufactured by HAKATA SALT co., ltd.) were each added to two types of base liquids using yeast material A or B as shown in Table 3 were respectively obtained as yeast-containing drinks of Examples 11 to 14 and Examples 15 to 18.

### [Table 3]

**Table 3**

| | Base liquid | Saccharide concentration (% by mass) | Salt concentration (% by mass) | Vanillin concentration (ppm) |
|---|---|---|---|---|
| Example 11 | Base liquid using yeast material A | 0.05 | 0.01 | 100 |
| Example 12 | | 0.1 | 0.01 | 100 |
| Example 13 | | 1.0 | 0.1 | 100 |
| Example 14 | | 5.0 | 0.1 | 100 |
| Example 15 | Base liquid using yeast material B | 0.05 | 0.01 | 100 |
| Example 16 | | 0.1 | 0.01 | 100 |
| Example 17 | | 1.0 | 0.1 | 100 |
| Example 18 | | 5.0 | 0.1 | 100 |

### <Sensory evaluation of yeast-containing drink>

Yeasty smell (grassy odor derived from yeast), bitter taste (bitter taste that stimulates the tongue), sweet taste (sweet taste like sugar), and palatability (good flavor balance, aroma that is felt to be delicious as a drink) in the yeast-containing drinks of Examples 1 to 18 and Comparative Examples 1 to 2 were evaluated by five expert panelists in 7 grades based on the following evaluation criteria. In each test example, the base liquid was used as a control sample. The evaluation results are average values obtained by five expert panelists.

### [Evaluation Criteria]

### <Yeasty smell>

7: Yeasty smell is not felt at all
6: Yeasty smell is felt less than the control although it is not as little as "7"
5: Yeasty smell is felt slightly less than the control
4: About the same as the control
3: Yeasty smell is felt slightly more than the control
2: Yeasty smell is felt more than the control although it is not as much as "1"
1: Strong yeasty smell is felt in the mouth

### <Bitter taste>

7: Bitter taste is not felt at all
6: Bitter taste is felt less than the control although it is not as little as "7"
5: Bitter taste is felt slightly less than the control
4: About the same as the control
3: Bitter taste is felt slightly more than the control
2: Bitter taste is felt more than the control although it is not as much as "1"
1: Bitter taste is felt stronger than the control

### <Sweet taste>

7: Sweet taste is felt stronger than the control
6: Sweet taste is felt more than the control although it is not as much as "7"
5: Sweet taste is felt slightly more than the control
4: About the same as the control
3: Sweet taste is felt slightly less than the control
2: Sweet taste is felt less than the control although it is not as little as "1"
1: Sweet taste is not felt at all

### <Palatability (overall evaluation)>

7: Very delicious
6: More delicious than the control although it is not as delicious as "7"
5: Slightly more delicious than the control
4: About the same as the control
3: Slightly less delicious than the control
2: Less delicious than the control although it is not as bad as "1"
1: Less delicious than the control

### [General Evaluation]

In addition, from the evaluation results of the four items described above, [General Evaluation] was evaluated in four grades of ⊙, ○, △, and × according to the following criteria.
⊙: All evaluations of "yeasty smell", "bitter taste", "sweet taste", and "palatability (overall evaluation)" are 5.5 or more
○: All evaluations of "yeasty smell", "bitter taste", "sweet taste", and "palatability (overall evaluation)" are 5.0 or more
△: All evaluations of "yeasty smell", "bitter taste", and "sweet taste" are 4.5 or more
×: Any one of the evaluations of "yeasty smell", "bitter taste", and "sweet taste" is less than 4.5

### [Test Example 1]: Evaluation of yeast-containing drinks with different vanillin concentrations (ppm) (Examples 1 to 10, Comparative Examples 1 to 2)

Yeast material A or B was used in the base liquid of Table 1, liquids to which vanillin in a concentration of Table 2 was added were used as test samples of yeast-containing drinks (Examples 1 to 10, Comparative Examples 1 to 2), and sensory evaluation was performed as described above for each test sample. The sensory evaluation results are shown in Tables 4 and 5 below.

In the evaluation points of yeasty smell (grassy odor derived from yeast), bitter taste (bitter taste that stimulates the tongue), sweet taste (sweet taste like sugar), and palatability (good flavor balance, aroma that is felt to be delicious as a drink), the test samples of Examples 1 and 6 in which 0.1 ppm of vanillin was added each showed significantly higher values than those of Comparative Examples 1 and 2 to which 0.05 ppm of vanillin was added (there was a significant difference in t-test (p<0.05)). In the evaluation points of yeasty smell (grassy odor derived from yeast), bitter taste (bitter taste that stimulates the tongue), sweet taste (sweet taste like sugar), and palatability (good flavor balance, aroma that is felt to be delicious as a drink), the test samples of Examples 2 to 5 and 7 to 10 each showed equivalent or higher values than those of Examples 1 and 6 and each showed significantly higher values than those of Comparative Examples 1 and 2 (there was a significant difference in t-test (p<0.05)).

**[Table 4]**

| Table 4: Sensory evaluation results | | | | | | |
|---|---|---|---|---|---|---|
| • Yeast material A (yeast material derived from baker's yeast) | | | | | | |
| | Comparative Example 1 | Example 1 | Example 2 | Example 3 | Example 4 | Example 5 |
| Vanillin concentration (ppm) | 0.05 | 0.1 | 1.0 | 100 | 200 | 300 |
| Yeasty smell | 4.4 | 5.4 | 5.4 | 6.2 | 6.2 | 6.6 |
| Bitter taste | 4.0 | 4.8 | 5.6 | 5.8 | 6.2 | 6.4 |
| Sweet taste | 4.0 | 4.8 | 5.0 | 6.0 | 6.2 | 6.4 |
| Palatability (Overall evaluation) | 4.0 | 4.6 | 5.2 | 5.6 | 6.2 | 4.6 |
| General evaluation | × | Δ | ○ | ⊙ | ⊙ | Δ |

**[Table 5]**

| Table 5: Sensory evaluation results | | | | | | |
|---|---|---|---|---|---|---|
| • Yeast material B (yeast material derived from beer yeast) | | | | | | |
| | Comparative Example 2 | Example 6 | Example 7 | Example 8 | Example 9 | Example 10 |
| Vanillin concentration (ppm) | 0.05 | 0.1 | 1.0 | 100 | 200 | 300 |
| Yeasty smell | 4.2 | 5.0 | 5.8 | 6.0 | 6.2 | 6.4 |
| Bitter taste | 4.4 | 5.0 | 5.6 | 5.8 | 6.2 | 6.2 |
| Sweet taste | 4.0 | 5.0 | 5.0 | 5.4 | 6.4 | 6.6 |
| Palatability (overall evaluation) | 4.0 | 4.8 | 5.4 | 5.8 | 6.2 | 4.4 |
| General evaluation | × | Δ | ○ | ○ | ⊙ | Δ |

### [Test Example 2]: Evaluation of yeast-containing drinks with vanillin concentration of 100 ppm and different concentrations of saccharide and salt (Examples 11 to 18)

Sensory evaluation was performed as described above for each test sample of Examples 11 to 18. The sensory evaluation results are shown in Tables 6 and 7 below.

In Examples 12 to 14 and 16 to 18 in which 0.1% by mass or more of saccharide was added and 0.01% by mass or more of salt was added, there was a tendency to show values higher than those in Examples 3 and 8 to which saccharide and salt were not added in the evaluation of yeasty smell (grassy odor derived from yeast), bitter taste (bitter taste that stimulates the tongue), sweet taste (sweet taste like sugar), and palatability (good flavor balance, aroma that is felt to be delicious as a drink).

**[Table 6]**

| Table 6: Sensory evaluation results with varying concentrations of saccharide and salt | | | | |
|---|---|---|---|---|
| • Yeast material A (yeast material derived from baker's yeast) | | | | |
| | Example 11 | Example 12 | Example 13 | Example 14 |
| Saccharide concentration (% by mass) | 0.05 | 0.1 | 1.0 | 5.0 |
| Salt concentration (% by mass) | 0.01 | 0.01 | 0.1 | 0.1 |
| Yeasty smell | 5.8 | 6.0 | 7.0 | 7.0 |
| Bitter taste | 6.0 | 6.4 | 6.8 | 7.0 |
| Sweet taste | 5.8 | 5.8 | 6.6 | 6.8 |
| Palatability (Overall evaluation) | 6.0 | 6.0 | 6.2 | 6.8 |
| General evaluation | ⊙ | ⊙ | ⊙ | ⊙ |

**[Table 7]**

| Table 7: Sensory evaluation results with varying concentrations of saccharide and salt | | | | |
|---|---|---|---|---|
| • Yeast material B (yeast material derived from beer yeast) | | | | |
| | Example 15 | Example 16 | Example 17 | Example 18 |
| Saccharide concentration (% by mass) | 0.05 | 0.1 | 1.0 | 5.0 |
| Salt concentration (% by mass) | 0.01 | 0.01 | 0.1 | 0.1 |
| Yeasty smell | 5.8 | 5.8 | 6.6 | 7.0 |
| Bitter taste | 5.8 | 6.4 | 6.6 | 6.8 |
| Sweet taste | 5.8 | 5.8 | 6.4 | 7.0 |
| Palatability (Overall evaluation) | 5.6 | 6.0 | 6.4 | 6.6 |
| General evaluation | ⊙ | ⊙ | ⊙ | ⊙ |

### [Preparation of Yeast Material C (Yeast Material Derived from Baker's Yeast)]

Dried yeast (Hyper Yeast HG-DY manufactured by Asahi Group Foods, Ltd.) was extracted with hot water. A heavy liquid (insoluble fraction) was separated from the yeast extract by a nozzle-type continuous centrifuge and sterilized in the condition of 125°C for 40 seconds and spray-dried to obtain a yeast cell body residue.

An aqueous suspension of the obtained yeast cell body residue (solid content: 16%) was subjected to solid-liquid separation while adding water using three nozzle-type continuous centrifuges arranged in series to obtain a heavy liquid from which soluble components were removed. The obtained heavy liquid was sterilized with the conditions of 125°C for 40 seconds, and spray-dried to obtain the yeast cell body residue as yeast material C.

### [Preparation of Yeast Material D (Yeast Material Derived from Beer Yeast)]

The beer yeast was extracted with hot water, and the water-insoluble fraction obtained by centrifugation was dried to obtain a yeast cell body residue. An aqueous suspension of the obtained yeast cell body residue (solid content: 16%) was sterilized (121°C, 15 min) in an autoclave and spray-dried to obtain a yeast cell body residue as yeast material D.

### [Test Example 3]

Yeast material C was used as a yeast material in the base liquid in Table 1, and a yeast-containing drink (Example 19) was obtained as a test sample using a liquid to which vanillin was added so that the vanillin concentration was 100 ppm. Also, yeast material D was used as a yeast material in the base liquid in Table 1, and a yeast-containing drink (Example 20) was obtained as a test sample using a liquid to which vanillin was added so that the vanillin concentration was 100 ppm.

Sensory evaluation was performed as described above for each sample. The sensory evaluation results are shown in Table 8 below.

Also in Examples 19 and 20 in which a yeast cell body residue was used as a yeast material instead of a cell wall lysing enzyme-decomposition product, by the addition of vanillin, yeasty smell (grassy odor derived from yeast), bitter taste (bitter taste that stimulates the tongue), sweet taste (sweet taste like sugar), and palatability (good flavor balance, aroma that is felt to be delicious as a drink) were improved as compared with the control sample (base liquid) to which vanillin was not added.

**[Table 8]**

| Table 8: Sensory evaluation results | | |
|---|---|---|
| | Example 19 | Example 20 |
| Base liquid | Base liquid using yeast material C | Base liquid using yeast material D |
| Vanillin concentration (ppm) | 100 | 100 |
| Yeasty smell | 6.2 | 6.0 |
| Bitter taste | 5.6 | 5.8 |
| Sweet taste | 5.6 | 5.8 |
| Palatability (Overall evaluation) | 5.8 | 5.6 |
| General evaluation | ⊙ | ⊙ |

### Industrial Applicability

When the yeast-containing drink of the present invention contains 0.1 ppm or more of vanillin together with 1 to 20% by mass of a yeast cell body residue or a cell wall lysing enzyme-decomposition product thereof, a characteristic yeasty smell (grassy odor derived from yeast) and a bitter taste (bitter taste that stimulates the tongue) peculiar to yeast are remarkably reduced, and a sweet taste (sweet taste like sugar) and palatability as an overall evaluation (good flavor balance, aroma that is felt to be delicious as a drink) are improved, so that the yeast-containing drink can be provided as a yeast-containing drink also suitable for direct drinking. Thus, the yeast-containing drink of the present invention makes it possible to more easily take proteins, dietary fibers and other nutrients, etc. derived from yeast.

## Claims

1. A yeast-containing drink comprising 1 to 20% by mass of a yeast cell body residue or a cell wall lysing enzyme-decomposition product thereof and 0.1 ppm or more of vanillin based on the total mass of the drink.

2. The yeast-containing drink according to claim 1, comprising 0.1 to 200 ppm of vanillin.

3. The yeast-containing drink according to claim 1, further comprising saccharide and salt.

4. The yeast-containing drink according to claim 3, comprising 0.1% by mass or more of saccharide and 0.005% by mass or more of salt based on the total mass of the drink.

5. The yeast-containing drink according to claim 1, further comprising 0.1 to 30% by mass of oil and fat based on the total mass of the drink.

6. The yeast-containing drink according to claim 1, wherein the residue is a water-insoluble fraction after hot water extraction of yeast.

7. The yeast-containing drink according to claim 1, wherein the decomposition product is a decomposition product of a yeast cell body residue with glucanase.

8. The yeast-containing drink according to any one of claims 1 to 7, which is a milk-substitute drink.

9. A method for producing a yeast-containing drink comprising 1 to 20% by mass of a yeast cell body residue or a cell wall lysing enzyme-decomposition product thereof and 0.1 ppm or more of vanillin based on the total mass of the drink, the method comprising mixing a suspension of the yeast cell body residue or the cell wall lysing enzyme-decomposition product thereof with vanillin.

10. A method for improving flavor of a yeast-containing drink, comprising formulating 0.1 ppm or more of vanillin in a yeast-containing drink comprising 1 to 20% by mass of a yeast cell body residue or a cell wall lysing enzyme- decomposition product thereof.
